(19) Europäisches Patentamt
European Patent Office
Office européen des brevets

(11) Veröffentlichungsnummer: **0 280 223 B1**

(12) **EUROPÄISCHE PATENTSCHRIFT**

(45) Veröffentlichungstag der Patentschrift: **23.10.91**

(51) Int. Cl.[5]: **C08G 16/02**, C11D 3/37

(21) Anmeldenummer: **88102526.6**

(22) Anmeldetag: **20.02.88**

# (54) Polyacetale, Verfahren zu deren Herstellung aus Dialdehyden und Polyaolcarbonsäuren und Verwendung der Polyacetale.

(30) Priorität: **25.02.87 DE 3706036**

(43) Veröffentlichungstag der Anmeldung:
**31.08.88 Patentblatt 88/35**

(45) Bekanntmachung des Hinweises auf die Patenterteilung:
**23.10.91 Patentblatt 91/43**

(84) Benannte Vertragsstaaten:
**AT BE CH DE ES FR GB IT LI NL SE**

(56) Entgegenhaltungen:
**EP-A- 0 001 004**
**FR-A- 881 474**
**GB-A- 859 483**
**US-A- 3 061 566**
**US-A- 3 723 322**

(73) Patentinhaber: **BASF Aktiengesellschaft**
**Carl-Bosch-Strasse 38**
**W-6700 Ludwigshafen(DE)**

(72) Erfinder: **Baur, Richard, Dr.**
**Nelkenstrasse 1**
**W-6704 Mutterstadt(DE)**
Erfinder: **Fikentscher, Rolf, Dr.**
**Von-Stephan-Strasse 27**
**W 6700 Ludwigshafen(DE)**
Erfinder: **Oftring, Alfred, Dr.**
**Berner Weg 26**
**W-6700 Ludwigshafen(DE)**
Erfinder: **Richter, Felix, Dr.**
**Kaiserstrasse 15**
**W-6835 Bruehl(DE)**
Erfinder: **Trieselt, Wolfgang, Dr.**
**Alwin-Mittasch-Platz 1**
**W-6700 Ludwigshafen(DE)**
Erfinder: **Diessel, Paul**
**Asternstrasse 16**
**W-6704 Mutterstadt(DE)**
Erfinder: **Winkler, Ekhard, Dr.**
**Pfalzring 74**
**W-6704 Mutterstadt(DE)**
Erfinder: **Perner, Johannes, Dr.**
**Ginsterweg 4**
**W-6730 Neustadt(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services

**Beschreibung**

Aufgrund gesetzgeberischer Maßnahmen ist es in vielen Ländern erforderlich, den Gehalt an Phosphaten in Waschmitteln stark herabzusetzen bzw. phosphatfreie Waschmittel anzubieten. Reduziert man den Gehalt an Phosphaten in Waschmitteln, so wird dadurch die Waschwirkung der Produkte verschlechtert. Daher werden Ersatzstoffe gesucht, die Phosphate in Waschmitteln ganz oder teilweise substituieren können.

Der vorliegenden Erfindung liegt die Aufgabe zugrunde, neue Stoffe zur Verfügung zu stellen, die beispielsweise als Zusatz zu phosphatreduzierten bzw. phosphatfreien Waschmitteln verwendet werden können und die die Waschwirkung der Waschmittel verbessern.

Die Aufgabe wird erfindungsgemäß gelöst mit Polyacetalen, die erhältlich sind durch Umsetzung von

a) Dialdehyden der Formel

$$OHC - A_n - CHO ,$$

in der

$A = -CH_2-, -CH_2-CH_2-, -CH_2-CH_2-CH_2-, -CH_2-CH_2-CH_2-CH_2-,$

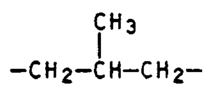

oder

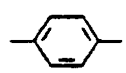

bedeutet und

n = 0 oder 1 ist, mit

b) mindestens 3 OH-Gruppen enthaltenden Polyolcarbonsäuren, die 5 bis 7 C-Atome aufweisen,

im Molverhältnis (a):(b) von 1:0,25 bis 4 im wäßrigen Medium in Gegenwart von sauren Katalysatoren.

Die Polyacetale werden hergestellt, indem man

a) Dialdehyde der Formel

$$OHC - A_n - CHO ,$$

in der

$A = -CH_2, -CH_2-CH_2-, -CH_2-CH_2-CH_2-, -CH_2-CH_2-CH_2-CH_2-,$

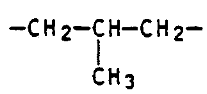

oder

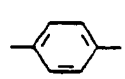

bedeutet und

n = 0 oder 1 ist, mit

b) mindestens 3 OH-Gruppen enthaltenden Polyolcarbonsäuren, die 5 bis 7 C-Atome aufweisen,

im Molverhältnis (a):(b) von 1:0,25 bis 4 in einem wäßrigen Medium bei Temperaturen bis 140 °C in Gegenwart von sauren Katalysatoren miteinander umsetzt und während der Umsetzung oder danach

Wasser aus dem Reaktionsgemisch entfernt. Die Komponenten (a) und (b) werden vorzugsweise im Molverhältnis 1:0,5 bis 2 bei Temperaturen von 60 bis 100 °C zur Reaktion gebracht.

Geeignete Dialdehyde der Komponente (a) sind beispielsweise Glyoxal, Malondialdehyd, Succindialdehyd, Glutardialdehyd, Adipindialdehyd oder Terephthaldialdehyd. Auch Mischungen der genannten Dialdehyde können bei der Synthese der Polyacetale eingesetzt werden. Außerdem ist es möglich. Derivate von Dialdehyden einzusetzen, die unter den Synthesebedingungen in die zugrundeliegenden Dialdehyde zerfallen, z.B. offenkettige Acetale, wie Glyoxaltetramethylacetal, Glyoxaltetraethylacetal oder Glutardialdehydtetramethylacetal, Halbacetale, wie 2,3-Dihydroxy-1,4-dioxan und Disulfate von Dialdehyden, z.B. Glyoxaldisulfat. Vorzugsweise verwendet man als Dialdehyde bei der Synthese der Polyacetale wäßrige Lösungen von Glyoxal. Glutardialdehyd oder Terephthaldialdehyd sowie Mischungen aus Glyoxal und Glutardialdehyd, Mischungen aus Glyoxal und Terephthaldialdehyd oder Mischungen aus Glutardialdehyd oder Terephthaldialdehyd sowie Mischungen aus Glyoxal, Glutardialdehyd oder Terephthaldialdehyd.

Die als Komponente (b) in Betracht kommenden Polyolcarbonsäuren leiten sich von Mono- oder Dicarbonsäuren ab, die 5 bis 7 Kohlenstoffatome und mindestens 3 OH-Gruppen in Molekül enthalten. Hierbei handelt es sich beispielsweise um folgende Zuckercarbonsäuren: Ribonsäure, Lyxonsäure, Mannonsäure, Altronsäure, Allonsäure, Gluconsäure, 2-Ketogluconsäure, 2,5-Diketogluconsäure, Gulonsäure, Idonsäure, Xylonsäure, Talonsäure, Galactonsäure, Mannozuckersäure, Glucarsäure, Galactarsäure, Alloschleimsäure, Glucoheptonsäure, Taloschleimsäure, Idozuckersäure, bzw. deren Lactone oder Dilactone. Vorzugsweise verwendet man als Komponente (b) Gluconsäure und/oder Glucoheptonsäure.

Die Komponenten (a) und (b) werden im Molverhältnis von 1:0,25 bis 4, vorzugsweise im Molverhältnis 1:0,5 bis 2 miteinander zur Reaktion gebracht. Um einen möglichst weitgehenden Reaktionsablauf zu gewährleisten, wird die Reaktion in Gegenwart von sauren Katalysatoren durchgeführt. Hierbei handelt es sich um starke, nichtflüchtige Säuren die einen pKa-Wert von unterhalb 1 besitzen. Geeignete Katalysatoren sind beispielsweise p-Toluolsulfonsäure, Schwefelsäure, Amidosulfonsäure, Methansulfonsäure und Benzolsulfonsäure.

Als saure Katalysatoren eignen sich auch Ionenaustauscher, die saure Gruppen enthalten, z.B. $SO_3H$- oder COOH-Gruppen. Die Katalysatoren werden, bezogen auf die bei der Reaktion eingesetzten Komponenten (a) und (b), in einer Menge von 0,5 bis 10, vorzugsweise 1 bis 5 Gew.% angewendet. Die Umsetzung kann innerhalb eines breiten Temperaturintervalls durchgeführt werden, z.B. von 25 bis 140, vorzugsweise bei 60 bis 110 °C. Sofern die Temperatur oberhalb der Siedetemperatur des jeweils verwendeten Reaktionsgemisches liegen sollte, wird die Reaktion unter erhöhtem Druck, z.B. in einem Autoklaven, durchgeführt. Üblicherweise wird die Umsetzung bei Normaldruck durchgeführt, sie kann jedoch auch unter vermindertem Druck vorgenommen werden. Die Umsetzung der Komponenten (a) und (b) von zusammen 20 bis 80, vorzugsweise 30 bis 70 Gew.%. Die Umsetzung kann auch in Gegenwart eines inerten organischen Lösemittels durchgeführt werden, in dem die Polyacetale unlöslich sind. Sie fallen dann in feinteiliger Form an. Als inerte organische Lösemittel kommen sowohl aliphatische als auch aromatische Kohlenwasserstoffe in Betracht, z.B. Pentan, Hexan, Cyclohexan, Heptan, n-Octan, iso-Octan, Nonan, Decan, Methylcyclohexan, Benzol, Toluol, o-Xylol, p-Xylol, m-Xylol, Ethylbenzol und Isopropylbenzol. Außerdem können chlorierte Kohlenwasserstoffe, wie Chloroform, Tetrachlorkohlenstoff, Methylenchlorid und Tetrachlorethan als inerte organische Lösemittel verwendet werden. Das Gewichtsverhältnis der Menge an inertem organischem Lösemittel zur verwendeten Wassermenge beträgt etwa 10:1 bis etwa 1:10 und liegt vorzugsweise im Bereich von 5:1 bis 1:2. Das als Lösemittel verwendete Wasser und das bei der Reaktion von (a) mit (b) entstehende Wasser wird zur Herstellung der Polyacetale aus dem Reaktionsgemisch entfernt. Pro Mol Polycarbonsäure, d.h. Komponente (b), werden bei der Herstellung der Polyacetale aus (a) und (b) 0,5 bis 3,5, vorzugsweise 1,0 bis 3,0 Mol Wasser gebildet und aus dem Reaktionsgemisch entfernt.

Die Umsetzung der Komponenten (a) und (b) kann zusätzlich in Gegenwart eines Wasser-in-Öl-Emulgators durchgeführt werden. Der HLB-Wert der Wasser-in-Öl-Emulgatoren liegt im Bereich von 2 bis etwa 8. Zur Definition des HLB-Werts wird auf die Veröffentlichung von W.C. Griffin, J.Soc. Cosmetic Chem., Band 5, 249 (1954) hingewiesen. Geeignete Wasser-in-Öl-Emulgatoren des angegebenen HLB-Bereichs sind beispielsweise Ölsäuretriethanolaminester, Ölsäurediethanolamid, Sorbitanmonooleat, Sorbitantristearat, Mannitmonooleat, Glycerinmonooleat und Glycerindioleat.

Bezogen auf die bei der Polyacetalbildung vorhandene Menge an Wasser setzt man 0 bis 30, vorzugsweise 1 bis 10 Gew.% eines Wasser-in-Öl-Emulgators ein. Außer den genannten Wasser-in-Öl-Emulgatoren können auch Emulgatoren mit einem HLB-Wert von mehr als 8 eingesetzt werden, z.B. polyethoxylierte Alkylphenole, deren Schwefelsäureester, $C_{10}$- bis $C_{20}$-Alkylsulfonate, Alkalimetall-, Ammonium- und Aminseifen, sulfatierte oder sulfonierte Öle, Alkalimetallsalze von Alkylarylsulfonsäuren, Salze von langkettigen Aminen, z.B. Oleylaminacetat, Ethylenoxid-Addukte an $C_6$- bis $C_{22}$-Fettalkohole oder Ethylenoxid-Addukte an Fettsäureamide, die sich von Fettsäuren mit 10 bis 18 Kohlenstoffatomen ableiten.

Die Ethylenoxid-Addukte an Alkylphenole, Fettalkohole oder Fettsäureamide enthalten 5 bis 40 Ethylenoxideinheiten im Molekül.

Die Reaktion der Dialdehyde mit den Polyolcarbonsäuren kann kontinuierlich oder diskontinuierlich durchgeführt werden. Mann kann beispielsweise einen Teil einer wäßrigen Lösung eines Dialdehyds und einer Polycarbonsäure in einem Reaktor vorlegen und in dem Temperaturbereich von 25 bis 140 °C zunächst vollständig umsetzen und anschließend den verbleibenden Teil absatzweise oder kontinuierlich zugeben und daraus das Polyacetal bilden. Der Katalysator kann beispielsweise vorgelegt werden oder auch mit einer oder beiden Reaktionskomponenten in den Reaktor dosiert werden. Das Wasser wird während oder im Anschluß an die Polyacetalbildung aus dem Reaktor abdestilliert. Man kann jedoch auch so verfahren, daß man eine Wasser-in-Öl-Emulsion im Reaktor vorlegt und die Komponenten (a) und (b) getrennt oder in Mischung zu der Wasser-in-Öl-Emulsion zulaufen läßt. Der Katalysator kann bereits zusammen mit der Wasser-in-Öl-Emulsion vorgelegt oder zusammen mit den Komponenten (a) und (b) oder auch getrennt davon in den Reaktor dosiert werden. Sofern man ein inertes organisches Lösemittel oder Lösemittelgemische bei der Polyacetalbildung mitverwendet, erfolgen Polyacetalbildung und Entfernung des Wassers aus dem System vorzugsweise gleichzeitig. Das Wasser wird dabei azeotrop aus dem Reaktionsgemisch entfernt. Die Polyacetale fallen dann in feinteiliger Form an. Es ist selbstverständlich, daß während der Reaktion für eine gute Durchmischung der Komponenten gesorgt werden muß, z.B. wird das Reaktionsgemisch gerührt. Damit sich die Polyacetale bei Anwendung eines inerten organischen Lösemittels, in dem sie unlöslich sind, in feinteiliger Form abscheiden, verwendet man vorzugsweise die obengenannten Emulgatoren und gegebenenfalls Netzmittel. Man erhält Polyacetale, die in Wasser löslich sind. Die Viskosität 40 %iger wäßriger Lösungen bei einer Temperatur von 25 °C beträgt z.B. 5 bis 1000 mPas und in einigen Fällen auch mehr als 1000, z.B. 1800 mPas. Bei den reinen Polyacetalen ist unterhalb von 300 °C kein definierter Schmelzpunkt feststellbar. Die IR-Spektren der Polyacetalcarbonsäuren zeigen in der Regel Schwingungsbanden bei 3430 $cm^{-1}$ (breit), 2930 $cm^{-1}$, 1780 $cm^{-1}$ und $1740^{-1}$ und mehrere Banden zwischen 1200 und 1000 $cm^{-1}$ sowie bei 930 $cm^{-1}$.

Die Polyacetale aus den oben angegebenen Dialdehyden und Polyolcarbonsäuren können für verschiedene Anwendungszwecke eingesetzt werden. Die Polyacetale vermögen sowohl Feststoffe zu dispergieren als auch Schwermetallionen zu komplexieren. Sie eignen sich daher beispielsweise als Zusatz zu peroxidhaltigen Wasch- und Bleichlaugen. Die Polyacetale haben ein ausgeprägtes Komplexierungsvermögen gegenüber Eisen-, Nickel-, Mangan-, Kupfer-, Calcium-, Magnesium- und Chromionen.

Die oben beschriebenen Polyacetale eignen sich außerdem als Zusatz zu Waschmitteln. Bei Verwendung der Polyacetale wird eine Erhöhung der Waschwirkung von phosphatarmen und phosphatfreien Waschmittelformulierungen festgestellt. Die Vergrauung von weißem Textilmaterial wird zurückgedrängt und die Inkrustierung von Textilen, die mit phosphatfreien oder phosphatarmen Waschmitteln unter Zusatz der Polyacetale gewaschen werden, verringert sich. Die Polyacetale werden beispielsweise in Waschmittelformulierungen als Gerüststoffe (Builder) in einer Menge von 1 bis 15 Gew.%, bezogen auf die Waschmittelformulierung, eingesetzt. Die Polyacetale sind dabei als Austauschstoffe für die bisher verwendeten Phosphate anzusehen.

Der besondere Vorteil der Polyacetale liegt gegenüber den Phosphaten darin, daß die Polyacetale biologisch abbaubar sind. Die oben beschriebenen Polyacetale können außerdem mit handelsüblichen Inkrustationsinhibitoren in Waschmittelformulierungen eingesetzt werden. Geeignete Inkrustationsinhibitoren sind beispielsweise aus der US-PS 3 308 067 und der EP-PS 75 820 bekannt. Bei den Inkrustationsinhibitoren handelt es sich beispielsweise um Polymerisate der Maleinsäure oder um Copolymerisate aus Acrylsäure und/oder Methacrylsäure mit Maleinsäure oder um Homopolymerisate der Acrylsäure. Die genannten Copolymerisate werden entweder in Form der Säuren, der Salze oder in partiell neutralisierter Form eingesetzt. Sie sind in einer Menge von 1 bis etwa 10 Gew.% am Aufbau der Waschmittelformulierung beteiligt. Für die Herstellung von Waschmittelformulierungen kann man auch von Mischungen aus den oben beschriebenen Polyacetalen und einem oder mehreren der genannten Inkrustationsinhibitoren ausgehen.

Beispiel 1

In einem mit Rührer, Wasserabscheider und Rückflußkühler versehenen Kolben mischte man 298 g (0,66 mol) 50 %ige wäßrige Glucoheptonsäure, 47,9 g (0,33 mol) 40 %iges wäßriges Glyoxal und setzte dann 6,6 g p-Toluolsulfonsäure-monohydrat und 350 g Chloroform zu. Das Gemisch wurde unter Rühren zum Rückflußsieden erhitzt. Mit Hilfe des Wasserabscheiders wurde das mit den Ausgangsstoffen eingebrachte und während der Reaktion entstandene Wasser azeotrop abdestilliert. Innerhalb von 6 Stunden wurden 189 g Wasser azeotrop aus dem Reaktionsgemisch abdestilliert. Im Verlauf der Umsetzung bildete

sich ein Niederschlag, der nach Beendigung der Umsetzung und nach dem Abkühlen des Reaktionsgemisches auf Raumtemperatur abfiltriert wurde. Der Niederschlag wurde anschließend bei 25 °C im Vakuum getrocknet. Man erhielt 151 g eines festen Produktes, das 1,5 Gew.% Glucoheptonsäurelacton enthielt (HPLC-Bestimmung).

Beispiel 2

In einem mit einem Rührer und einem Wasserabscheider versehenen Kolben wird ein Gemisch aus 204 g (0,45 mol) 50 %ige wäßrige Glucoheptonsäure, 6,1 g p-Toluolsulfonsäure-monohydrat sowie 11,7 g 35 %iges wäßriges Palmitin-natriumsulfonat (35 %ig in Wasser) in 390 g Toluol vorgelegt. Das Reaktionsgemisch wird zum Sieden erhitzt, so daß azeotrop Wasser abgeschieden wird. Sobald die Mischung zu sieden beginnt, gibt man innerhalb von 1 Stunde 65,3 g (0,45 mol) 40 %iges Glyoxal zu, und destilliert weiterhin Wasser azeotrop ab. Nach weiteren 3 Stunden ist die Reaktion beendet. Die insgesamt abgeschiedene Wassermenge beträgt 165 g. Das Reaktionsgemisch wird dann gekühlt, das Polyacetal abfiltriert und im Vakuum getrocknet. Man erhält 125 g eines festen Produktes, in dem kein Glucoheptonsäurelacton mehr nachweisbar ist.

Beispiel 3

In der in Beispiel 1 angegebenen Apparatur legt man 196,1 g (0,5 mol) 50 %iger wäßriger Gluconsäure, 72,5 g (0,5 mol) 40 %iges wäßriges Glyoxal, 15 g des Natriumsalzes des Schwefelsäureesters des Additionsproduktes von 25 mol. Ethylenglykol an 1 mol Isooctylphenol (40 %ig in Wasser) und 6,4 g p-Toluolsulfonsäure-monohydrat in 350 g Toluol vor. Innerhalb eines Zeitraums von 7 Stunden kreist man 167 g Wasser aus. Nach Abtrennen des Toluols verbleibt ein ölig-viskoser, gelber Rückstand, der beim Trocknen im Vakuum erstarrt (110 g). Er enthält 4,9 Gew.% Gluconsäurelacton.

Beispiel 4

Beispiel 3 wird mit der Ausnahme wiederholt, daß man die Glyoxallösung innerhalb von 4 Stunden in die Mischung zutropft und gleichzeitig das als Lösemittel verwendete Wasser und das bei der Reaktion entstehende Wasser azeotrop abdestilliert. 2,5 Stunden nach Zugabe der Glyoxallösung beträgt die gesamte abdestillierte Menge an Wasser 167 g. Man erhält 101 g eines Festprodukts, in dem sich kein Gluconsäurelacton nachweisen läßt.

Beispiel 5

Beispiel 4 wurde mit der Ausnahme wiederholt, daß man noch zusätzlich 39 g des Natriumsalzes des Schwefelsäureesters des Additionsproduktes von 25 mol Ethylenoxid an 1 mol Isooctylphenol (40 %ig in Wasser) (Emulgator) einsetzte. Die abdestillierte Wassermenge betrug 172 g. Es verblieb ein fester Rückstand von 115 g, der 3,9 Gew.% Gluconsäurelacton enthielt.

Beispiel 6

In einem Kolben, der mit Rührer und Wasserabscheider ausgestattet ist, legt man 390 g Toluol, 11,6 g Palmitinsulfonat-natrium (40 %ig in Wasser), 6,4 g p-Toluolsulfonsäure-monohydrat und 192,7 g (0,5 mol) 50,9 %ige wäßrige Gluconsäure vor. Die Mischung wird intensiv gerührt und zum Sieden erhitzt. Unmittelbar nach Siedebeginn tropft man innerhalb 1 Stunde 200 g (0,5 mol) 25 %igen wäßrigen Glutardialdehyd zu. 4 Stunden nach Beginn des Rückflußsiedens sind 278 g Wasser azeotrop abdestilliert. Das Reaktionsgemisch wird dann auf Raumtemperatur abgekühlt, der Niederschlag abgesaugt und im Vakuum bei 25 °C getrocknet. Man erhält 126 g eines Polyacetals, in dem kein Gluconsäurelacton mehr nachweisbar ist.

Beispiel 7

Man wiederholt das Beispiel 6 mit der Ausnahme, daß man anstelle von Gluconsäure 226 g (0,5 mol) 50 %ige wäßrige Glucoheptonsäure einsetzt. Innerhalb von 6 Stunden werden dabei 296 g Wasser azeotrop abdestilliert. Nach dem Abkühlen, Filtrieren und Trocknen erhält man 161 g eines Festprodukts, das 1 Gew.% Gluconsäurelacton enthält.

Beispiel 8

In der in Beispiel 1 beschriebenen Apparatur legt man 390 g Toluol, 38,7 g 40 %iges wäßriges Natriumpalmitinsulfonat, 6,4 g p-Toluolsulfonsäure-monohydrat, 192,7 g (0,5 mol) 50,9 %ige wäßrige Gluconsäure und 71,3 g (0,5 mol) 94 %igen Terephthaldialdehyd vor. Das Reaktionsgemisch wird intensiv gerührt und zum Sieden erhitzt. Innerhalb von 5 Stunden nach Siedebeginn werden 145 g Wasser azeotrop abdestilliert. Nach dem Abkühlen des Reaktionsgemisches, Absaugen und Trocknen des entstandenen Niederschlags verbleiben 152 g Polyacetal, in dem kein Dialdehyd und keine Gluconsäure mehr nachweisbar sind.

Beispiel 9

In der in Beispiel 1 beschriebenen Apparatur mischt man 196 g (0,5 mol) 50 %ige wäßrige Gluconsäure, 72,6 g (0,5 mol) 40 %iges wäßriges Glyoxal und 9,8 g p-Toluolsulfonsäure-monohydrat und 370 g Chloroform. Die Mischung wird intensiv gerührt und 8 Stunden zum Sieden erhitzt. Hierbei scheiden sich insgesamt 155 g Wasser azeotrop ab. Das Reaktionsgemisch wird dann abgekühlt und das Chloroform nach dem Absetzen vom festen Rückstand abdekantiert. Der Rückstand wird im Vakuum bei 25 °C getrocknet. Man erhält 115 g Polyacetal, in dem keine Gluconsäure mehr nachweisbar ist.

Beispiel 10

In der in Beispiel 1 beschriebenen Apparatur wird eine Mischung aus 235,2 g (0,6 mol) 50 %iger wäßriger Gluconsäure, 43,5 g (0,3 mol) 40 %igem Glyoxal, 5,0 g p-Toluolsulfonsäure-monohydrat und 390 g Toluol unter Rühren zum Sieden erhitzt. Innerhalb von 4 Stunden werden 151 g Wasser azeotrop abdestilliert. Das Reaktionsgemisch wird dann gekühlt, der feinteilige Rückstand abfiltriert und im Vakuum getrocknet. Man erhält 121 g eines Polyacetals, das 4,2 Gew.% Gluconsäurelacton enthält.

Beispiel 11

In einem Kolben, der mit zwei Tropftrichtern, einem Rührer und einem Wasserabscheider ausgestattet ist, erhitzt man eine Lösung von 5,0 g p-Toluolsulfonsäure-monohydrat in 370 g Toluol zum Sieden und tropft dann innerhalb von 1,5 Stunden 235,2 g (0,6 mol) 50 %ige wäßrige Gluconsäure und gleichzeitig damit 43,5 g (0,3 mol) 40 %iges wäßriges Glyoxal zu. 3,5 Stunden nach Zugabe der Gluconsäure und des Glyoxals beträgt die Menge des azeotrop abdestillierten Wassers 154 g. Das Reaktionsgemisch wird dann auf Raumtemperatur abgekühlt, der Niederschlag abfiltriert und getrocknet. Man erhält 115 g eines Festprodukts, das noch 3,5 % Gluconsäurelacton enthält.

Beispiel 12

Beispiel 9 wurde mit der Ausnahme wiederholt, daß man auf den Einsatz des Chloroforms verzichtete. Das zunächst als Lösemittel verwendete Wasser und das bei der Reaktion entstehende Wasser wird bei 400 mbar und einer Temperatur von 100 °C entfernt. Man erhält auf diese Weise 125 g Polyacetal, das 8,3 % Gluconsäure enthält. Um den Katalysator aus dem Polyacetal zu entfernen, wird der Rückstand in Methanol dispergiert, dann abfiltriert und bei 25 °C im Vakuum getrocknet. Man erhält 112 g Polyacetal.

Anwendungstechnische Beispiele

Meßmethoden

A. Bestimmung der Eisenkomplexierkapazität/Eisenhydroxid-Dispergierkapazität

Die inhibierende Wirkung von Komplexbildnern oder Dispergiermitteln auf die Ausfällung von Eisen(III)-hydroxid wird durch Trübungstitration bestimmt. Es wird die zu untersuchende Substanz vorgelegt und in alkalischer Lösung mit Eisen(III)-chlorid-Lösung bis zur Trübung titriert.

Die Titration erfolgt automatisch mit Hilfe eines Titroprozessors; es wird dabei die Lichtdurchlässigkeit der Lösung mit einem Lichtleiterphotometer verfolgt. Eine Titration von Hand ist nicht empfehlenswert, da sich die Lösungen im Verlauf der Titration meist stark verfärben und dadurch das Einsetzen der Trübung nur schwer zu erkennen ist.

Das Ausmaß der Verfärbung (hervorgerufen durch kolloidal dispergiertes Eisenhydroxid) gibt einen Hinweis auf die Dissoziationsneigung des gebildeten Komplexes. Ein grobes Maß dafür ist die Steigung der Titrationskurve vor Erreichen des Äquivalenzpunktes. Sie wird gemessen in % Transmission/ml $FeCl_3$-Lösung. Die reziproken Werte geben somit die Stärke der Komplexe an.

Der Äquivalenzpunkt erscheint als Knickpunkt der Titrationskurve. Komplexbildner mit Dispergierwirkung zeigen zwei Knickpunkte, von denen der zweite meist weniger ausgeprägt ist. Reine Dispergiermittel zeigen einen schwach ausgeprägten Knickpunkt; bei derartigen Produkten erhält man bei Zusatz der üblichen, maximalen Volumina an $FeCl_3$-Lösung (50 ml 0.05 molare $FeCl_3$-Lösung) noch keinen Äquivalenzpunkt, damit noch keine auswertbaren Titrationskurven. Produkte mit diesem Verhalten sind in der Tabelle als "Dispergiermittel" gekennzeichnet.

1 mmol der zu untersuchenden Subvstanz wird in 100 ml destilliertem Wasser gelöst. Der pH-Wert wird mit 1 n NaOH auf 10 eingestellt und während der Titration konstant gehalten. Man titriert bei Raumtemperatur oder 60 °C mit einer Geschwindigkeit von 0,4 ml/min mit 0,05 m $FeCl_3$-Lösung.

Die Komplexier- bzw. Dispergierkapazität wird ausgedrückt als:

$$\text{mol Fe/Mol WS}^{1)} = \text{ml verbrauchter } FeCl_3\text{-Lösung}$$

oder

$$\text{mg Fe/g WS} = \frac{\text{ml verbrauchter } FeCl_3\text{-Lösung}}{MG_{WS}} \times 2790$$

1) WS = Wirksubstanz

Die Ergebnisse sind in der Tabelle angegeben.

B. Prüfung der Natriumperboratstabilisierung in Waschflotten

Prinzip

Das für die Bleichwirkung in natriumperborathaltigen Waschmittelformulierungen verantwortliche Wasserstoffperoxid wird durch Schwermetallionen (Fe, Cu, Mn) katalytisch zersetzt. Durch Komplexierung der Schwermetallionen läßt sich dies verhindern. Die peroxidstabilisierende Wirkung der Komplexbildner wird über den Restperoxidgehalt nach Warmlagerung einer schwermetallhaltigen Waschflotte geprüft.

Der Gehalt an Wasserstoffperoxid wird vor und nach der Lagerung über eine Titration mit Kaliumpermanganat in saurer Lösung bestimmt.

Zur Prüfung werden zwei Waschmittelformulierungen benutzt:

(A) Phosphathaltige Formulierung
Zusammensetzung (in Gew.%).
19,3 % Natrium-$C_{12}$-Alkylbenzolsulfonat
15,4 % Natriumperborat
30,8 % Natriumtriphosphat
2,6 % Acrylsäure-/Maleinsäure-Copolymerisat vom Molekulargewicht 70.000
31,0 % Natriumsulfat
0,9 % Polyacetal

(B) Phosphatreduzierte Formulierung
Zusammensetzung (in Gew.%):
15 % Natrium-$C_{12}$-Alkylbenzolsulfonat
5 % des Additionsproduktes von 1 Mol Talgfettalkohol an 11 Mol Ethylenoxid
20 % Natriumperborat
6 % Natrium-metasilikat
1,25 % Magnesiumsilikat
20 % Natriumtriphosphat
31,75 % Natriumsulfat
1 % Polyacetal

Aus den Formulierungen (A) und (B) werden jeweils Waschflotten hergestellt, indem man die Formulierungen (A) und (B) in Wasser mit einer Härte von 25° dH löst. Die Konzentration von (A) in der Waschflotte (A) beträgt 6,5 g/l und der pH-Wert 8,15; die Konzentration von (B) in der Waschflotte (B) 8 g/l, der pH-Wert 10,1. Zur Prüfung der Perboratstabilisierung setzt man den Waschflotten (A) und (B) jeweils eine Mischung aus 2 ppm $Fe^{3+}$, 0,25 ppm $Cu^{2+}$ und 0,25 ppm $Mn^{2+}$-Ionen in Form einer wäßrigen Lösung zu und lagert die Waschflotte (A) 2 Stunden bei 80° C und die Waschflotte (B) 2 Stunden bei 60° C.

C. Prüfung der Inkrustierungs-Inhibierung durch Trübungsmessung

Prinzip

Waschflotten trüben bei der Warmlagerung durch Ausfällen von schwerlöslichen Waschmittelbestandteilen ein. Die Endtrübung nach 2 Stunden ist ein Maß für die fällungsverhindernde Wirksamkeit der Inkrustierungsinhibitoren.

Zur Prüfung wird eine phosphatfreie Modellwaschflotte verwendet, die mit 6,5 g/l Waschmittel angesetzt wird und folgendermaßen zusammengesetzt ist:

2,7 % Natrium-$C_{12}$-Alkylbenzolsulfonat
3,3 % des Anlagerungsproduktes von 25 Mol Ethylenoxid an 1 Mol Talgfettalkohol
10,8 % Na-metasilikat
27 % Soda
2,1 % CMC
1,8 % Acrylsäure-Maleinsäure-Copolymerisat vom Molekulargewicht 70.000
9,2 % Polyacetal
43,1 % $Na_2SO_4$

Die Warmlagerung der Modellwaschflotte erfolgt in Wasser mit 22,4° dH über einen Zeitraum von 2 Stunden, danach wird die Trübung nephelometrisch [niedrige Werte der Trübung (NTU-Einheiten) bedeuten gute wirksame Produkte, hohe Werte schlecht wirksame Produkte] bestimmt.

D. Bestimmung des Calcium-Bindevermögens:

1 g Wirksubstanz werden in 10 ml 10 %iger Soda gelöst, mit 1 n NaOH wird ein pH-Wert von 11 eingestellt. Mit 0,35 m Calciumacetatlösung wird anschließend unter pH-Wert-Konstanthaltung bis zu beginnenden Trübung titriert.

Tabelle

| Polyacetal, hergestellt nach Beispiel Nr. | Calcium-Bindevermögen mg Ca/g WS bei 20°C pH 11 | EISEN Komplexierung bzw. Dispergierung mol Fe / mol WS | mg Fe / gWS | % Transmission (am Knickpunkt) ml $FeCl_3$ Lösung | Perborat-stabilisierung in Waschmittelformulierung (A) [in %] | (B) [in %] | Wirkung als Inkrustierungsinhibitor [NTU-Einheiten] |
|---|---|---|---|---|---|---|---|
| 1 | 10 | "Dispergiermittel" | | - | - | 32,7 | 140 |
| 2 | 30 | "Dispergiermittel" | | | 33,1 | 58,6 | 180 |
| 3 | 65 | "Dispergiermittel" | | | 29,6 | 59,6 | 260 |
| 4 | | 0,42 | 108 | 4,4 | 24,4 | 46,8 | |
| 5 | | 0,34 | 87 | 5,8 | 23,7 | 44,8 | 255 |
| 6 | 25 | "Dispergiermittel" | | - | 34,1 | 58,6 | |
| 7 | 20 | "Dispergiermittel" | | | 30,6 | 59,1 | 115 |
| 9 | 10 | 1,5 | 269 | 25,5 | 33,3 | 33,7 | 170 |
| 10 | 15 | 1,27 | 140 | 14,3 | 35,5 | 30,7 | 295 |
| 11 | 15 | 1,14 | 126 | 9,7 | 36,8 | 31,7 | 140 |
| ohne Builder | 0 | 0 | 0 | | 21,0 | 28,5 | 260 |

## Patentansprüche

1. Polyacetale, erhältlich durch Umsetzung von
   a) Dialdehyden der Formel

$$OHC - A_n - CHO ,$$

in der
A = $-CH_2-$, $-CH_2-CH_2-$, $-CH_2-CH_2-CH_2-$, $-CH_2-CH_2-CH_2-CH_2-$,

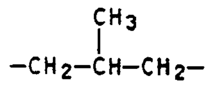

oder

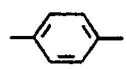

bedeutet und
n = 0 oder 1 ist, mit
b) mindestens 3 OH-Gruppen enthaltenden Polyolcarbonsäuren, die 5 bis 7 C-Atome aufweisen,

im Molverhältnis (a):(b) von 1:0,25 bis 4 in wäßrigem Medium in Gegenwart von sauren Katalysatoren.

2. Verfahren zur Herstellung von Polyacetalen nach Anspruch 1 bei Temperaturen bis 140 °C und unter Entfernung von Wasser aus dem Reaktionsgemisch.

3. Verfahren nach Anspruch 2, dadurch gekennzeichnet, daß man die Komponenten (a) und (b) im Molverhältnis 1:0,5 bis 2 bei Temperaturen von 60 bis 110 °C umsetzt.

4. Verfahren nach den Ansprüchen 2 und 3, dadurch gekennzeichnet, daß man als Komponente (a) Glyoxal, Glutardialdehyd, Terephthaldialdehyd oder deren Gemische einsetzt.

5. Verfahren nach den Ansprüchen 2 und 3, dadurch gekennzeichnet, daß man als Komponente (b) Gluconsäure und/oder Glucoheptonsäure einsetzt.

6. Verfahren nach den Ansprüchen 2 bis 5, dadurch gekennzeichnet, daß man die Umsetzung in Gegenwart eines inerten organischen Lösemittels durchführt, in dem die Polyacetale unlöslich sind.

7. Verfahren nach Anspruch 6, dadurch gekennzeichnet, daß man die Umsetzung zusätzlich in Gegenwart eines Wasser-in-Öl-Emulgators durchführt.

8. Verwendung von Polyacetalen gemäß Anspruch 1 als Zusatz zu Waschmitteln.

9. Verwendung von Polyacetalen gemäß Anspruch 1 als Komplexbildner.

## Claims

1. A polyacetal obtainable by reaction of
a) a dialdehyde of the formula

$OHC - A_n - CHO$

where
A is $-CH_2-$, $-CH_2-CH_2-$, $-CH_2-CH_2-CH_2-$, $-CH_2-CH_2-CH_2-CH_2-$,

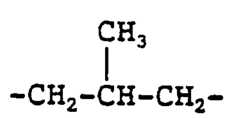

or

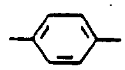

and

n is 0 or 1, with

b) a polycarboxylic acid of 5 to 7 carbon atoms which contains not less than 3 OH groups,

in a molar ratio (a):(b) of 1:0.25 to 4 in an aqueous medium in the presence of an acid catalyst.

2. A process for preparing a polyacetal as claimed in claim 1 at up to 140°C and with removal of water from the reaction mixture.

3. A process as claimed in claim 2, wherein components (a) and (b) are reacted in a molar ratio of 1:0.5 to 2 at from 60 to 110°C.

4. A process as claimed in either of claims 2 and 3, wherein component (a) is glyoxal, glutardialdehyde, terephthaldialdehyde or a mixture thereof.

5. A process as claimed in either of claims 2 and 3, wherein component (b) is gluconic acid and/or glucoheptonic acid.

6. A process as claimed in any of claims 2 to 5, wherein the reaction is carried out in the presence of an inert organic solvent in which the polyacetal is insoluble.

7. A process as claimed in claim 6, wherein the reaction is additionally carried out in the presence of a water-in-oil emulsifier.

8. Use of a polyacetal as claimed in claim 1 as an additive in washing agents.

9. Use of a polyacetal as claimed in claim I, as a complexing agent.

**Revendications**

1. Polyacétals, que l'on peut obtenir par la réaction

a) de dialdéhydes de la formule

$OHC - A_n - CHO$ ,

A = $-CH_2-$, $-CH_2-CH_2-$, $-CH_2-CH_2-CH_2-$, $-CH_2-CH_2-CH_2-CH_2-$,

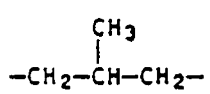

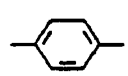

n = 0 ou 1, avec

b) des acides polyolcarboxyliques qui contiennent au moins 3 radicaux OH et qui présentent jusqu'à 7 atomes de carbone,

dans le rapport molaire (a):(b) de 1:0,25 à 4, en milieu aqueux, en présence de catalyseurs acides.

2. Procédé de préparation de polyacétals selon la revendication 1, à des température s'élevant jusqu'à 140°C et sous élimination d'eau du mélange réactionnel.

3. Procédé suivant la revendication 2, caractérisé en ce que l'on fait réagir les composants (a) et (b) dans le rapport molaire de 1:0,5 à 2, à des températures de 60 à 110 °C.

4. Procédé suivant les revendications 2 et 3, caractérisé en ce que l'on utilise, à titre de composant (a), le glyoxal, le glutardialdéhyde, le téréphtaldialdéhyde ou leurs mélanges.

5. Procédé suivant les revendications 2 et 3, caractérisé en ce que l'on utilise l'acide gluconique et/ou l'acide glucoheptonique à titre de composant (b).

6. Procédé suivant les revendications 2 à 5, caractérisé en ce que l'on réalise la réaction en présence d'un solvant organique inerte dans lequel les polyacétals sont insolubles.

7. Procédé suivant la revendication 6, caractérisé en ce que l'on réalise complémentairement la réaction en présence d'un émulsif eau-dans-huile.

8. Utilisation de polyacétals selon la revendication 1 à titre d'additif de détergents.

9. Utilisation de polyacétals selon la revendication 1 à titre d'agents de complexation.